**Europäisches Patentamt**

**European Patent Office**

**Office européen des brevets**

(19)

(11) Veröffentlichungsnummer: **0 303 151**
**A1**

## (12) EUROPÄISCHE PATENTANMELDUNG

(21) Anmeldenummer: **88112493.7**

(22) Anmeldetag: **01.08.88**

(51) Int. Cl.⁴: **H01F 1/10**

(30) Priorität: **11.08.87 DE 3726667**

(43) Veröffentlichungstag der Anmeldung:
**15.02.89 Patentblatt 89/07**

(84) Benannte Vertragsstaaten:
**DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Meisen, Ulrich, Dr.**
**Breslauerstrasse 31**
**D-4150 Krefeld 11(DE)**
Erfinder: **Buxbaum, Gunter, Dr.**
**Holzapfelweg 2**
**D-4150 Krefeld(DE)**

(54) **Feinteilige magnetische borhaltige Hexaferritpigmente, Verfahren zu ihrer Herstellung sowie deren Verwendung.**

(57) Feinteilige magnetische Hexaferritpigmente der allgemeinen Zusammensetzung:

$$M(I)_x M(II)_y M(III)_z B_v Fe_{12-(y+z+v)}O_{19},$$

wobei

$0 <= x <= 3,\ 0,1 <= (y+z) <= 3,\ (x+y+z) > 1,0$ und $0 <= v <= 6$

M(I) = Ba, Sr, Ca, Eu, Pb oder eine Kombination von RE und einwertigen Kationen der Gruppe Li, Na, K, Rb, Cs, Ag, Tl und RE = La, Y, Sc, Bi oder andere Seltenerdmetalle ist und

M(II) = Fe(II), Mn, Co, Ni, Zn, Cu, Cd, Mg, Sn(II) und

M(III) = Ti, Zr, Hf, Ga, Sn(IV), Ge, In, Sc, Nb, Ta, V, As, Sb, Bi, Al, Cr(III), Mo, W bedeuten,

und die Hexaferritpigmente Bor als Dotierungselement darstellen.

### Feinteilige magnetische borhaltige Hexaferritpigmente, Verfahren zu ihrer Herstellung sowie deren Verwendung

Die vorliegende Erfindung betrifft feinteilige magnetische Hexaferritpigmente der allgemeinen Zusammensetzung

$$M(I)_x m(II)_y M(III)_z B_v Fe_{12-(y+z+v)} O_{19},$$

wobei

$0 <= x <= 3$, $0,1 <= (y+z) <= 3$, $(x+y+z) > 1,0$ und $0 <= v <= 6$

M(I) = Ba, Sr, Ca, Eu, Pb oder eine Kombination von RE und einwertigen Kationen der Gruppe Li, Na, K, Rb, Cs, Ag, Tl und RE = La, Y, Sc, Bi oder andere Seltenerdmetalle ist und

M(II) = Fe(II), Mn, Co, Ni, Zn, Cu, Cd, Mg, Sn(II) und

M(III) = Ti, Zr, Hf, Ga, Sn(IV), Ge, In, Sc, Nb, Ta, V, As, Sb, Bi, Al, Cr(III), Mo, W

bedeuten, Verfahren zur Herstellung dieser Hexaferritpigmente, sowie deren Verwendung in magnetischen Aufzeichnungsmedien. Hexaferrite weisen Koerzitivfeldstärken auf, wie sie für die hochdichte magnetische Speicherung benötigt werden (45-120 kA/m). Sie sind Metallpigmenten in ihrer Korrosionsstabilität und $CrO_2$ und Co-dotierten Eisenoxidpigmenten in ihrer Thermostabilität überlegen. Derartige Hexaferritpigmente mit Magnetoplumbit(M)- oder W-Struktur wurden für diese Zwecke vorgeschlagen.

Zur Senkung der Koerzitivkraft feinteiliger reiner Barium-, Strontium- oder Bleihexaferrite wird üblicherweise mit Co und Ti-Ionen dotiert.

Ein Ziel der vorliegenden Erfindung ist der Ersatz des teuren Kobalts durch billigere Elemente unter Beibehalt der magnetischen Eigenschaften. Aus der US-A 4.279.763 ist bekannt, daß ein Zusatz eines wasserlöslichen Borats mit KF die Koerzitivkraft des Bariumhexaferrits mit M-Struktur erhöht. In der US-A 4.117.058 wird ebenfalls von borhaltigen Bariumhexaferriten berichtet.

Aus Japanese J. Appl. Phys. 9 (1970), 711 ist bekannt, daß Borzusätze zu $BaFe_{12}O_{19}$ die Koerzitivkraft und Sättigungsmagnetisierung des Bariumhexaferrits stark senken. Untersucht wurden dabei der Bereich von 0,032 bis 1,26 Mol $B_2O_3$, bezogen auf Bariumferrit. Aus einer Reihe von Patentschriften ist die Verwendung von Boraten als Flux (DE-A 3.021.218) und die Verwendung vorhaltiger Gläser zur Herstellung von Bariumhexaferrit bekannt (US-A 3.716.630, US-A 4.493.874). Hierbei liegt das Bor als Boroxid an der Oberfläche der feinen Bariumferritteilchen, was die Dispergierbarkeit der Hexaferritpigmente verbessert. Ein bordotierter feinteiliger Bariumhexaferrit mit den für hochdichte Aufzeichnung erforderlichen Eigenschaften wurde jedoch bisher nicht beschrieben.

Überraschenderweise wurde nun gefunden, daß ein Zusatz von 0,005 bis 5 Gew.-% $B_2O_3$, bezogen auf den Hexaferrit, die Koerzitivkraft eines mit M(II) und M(III) dotierten Hexaferrits soweit senkt, daß sie im für hochdichte Aufzeichnung richtigen Bereich liegt. Hier bedeuten M(II) = Fe(II), Mn, Co, Ni, Cu, Zn, Cd, Mn, Mg, Cd, Sn(II); M(III) = Ti, Zr, Hf, Ga, Sn(IV), Ge, In, Sc, Nb, Ta, V, Sb, As, Sb, Bi, Al, Cr(III), Mo, W. Die Sättigungsmagnetisierung steigt dabei überraschenderweise ebenfalls an.

Wie bereits in US-A 4.493.874 beschrieben, verbessert sich die Dispergierbarkeit derartiger feinteiliger Hexaferritpigmente. Ein geringer Bariumüberschuß, der zu einer Bildung der entsprechenden Menge Fe(II) statt Fe(III) führt, ist bei der Herstellung von hartmagnetischen Hexaferriten üblich. Daz Ziel der teilweisen Substitution von Kobalt oder anderer Metalle durch Bor konnte erreicht werden durch Hexaferritpigmente der allgemeinen Zusammensetzung:

$$M(I)_x M(II)_y M(III)_z B_v Fe_{12-(y+z+v)} O_{19},$$

wobei

$0 <= x <= 3$, $0,1 <= (y+z) <= 3$, $(x+y+z) > 1,0$ und $0 <= v <= 6$

M(I) = Ba, Sr, Ca, Eu, Pb oder eine Kombination von RE und einwertigen Kationen der Gruppe Li, Na, K, Rb, Cs, Ag, Tl und RE = La, Y, Sc, Bi oder andere Seltenerdmetalle ist und

M(II) = Fe(II), Mn, Co, Ni, Zn, Cu, Cd, Mg, Sn(II) und

M(III) = Ti, Zr, Hf, Ga, Sn(IV), Ge, In, Sc, Nb, Ta, V, As, Sb, Bi, Al, Cr(III), Mo, W bedeuten,

mit einem Borgehalt zwischen 0,005 und 5 Gew.-%. Hierdurch können bei gleichen oder verbesserten magnetischen Eigenschaften bis zu 30 % des teuren Kobalts durch das preisgünstige Bor ersetzt werden.

Gegenstand der Erfindung ist auch ein Verfahren zur Herstellung der erfindungsgemäßen feinteiligen Hexaferritpigmente durch Zersetzung von entsprechenden Metallsalzen organischer Verbindungen in Gegenwart oberflächenaktiver Substanzen bei erhöhter Temperatur unter oxidierenden Bedingungen, wobei die Metallsalze komplexe Verbindungen von Hydroxycarbonsäuren mit den entsprechenden Metallionen und gegebenenfalls Ammoniak sind. Bor wird hierbei als Boroxid, Borsäure, Ammoniumborat oder als ein Metallborat des entsprechenden Metalls in wasserlöslicher Form eingesetzt, so daß gewährleistet ist, daß das Bor in das Gitter des Hexaferrits eingebaut wird und sich nicht nur an der Oberfläche der einzelnen Teilchen anreichert.

Eine besonders bevorzugte Ausführungsform des erfindungsgemäßen Verfahrens besteht darin, daß als Metallsalze solche der Zusammensetzung $NH_4(Me_nAn_m)^*pH_2O$ eingesetzt werden (n = 0,21-0,5 für Me = Fe; m = 0,27-0,43 für An = $C_6H_4O_7$ und p = 0,04-1,5), wobei an das Anion einer Hydroxycarbonsäure ist und Me das durch die gewünschte Zusammensetzung vorgegebene Metallion ist. Besonders bevorzugt wird als Hydroxycarbonsäure die Citronensäure eingesetzt.

Es hat sich als vorteilhaft erwiesen, den pH-Wert auf einen schwach sauren Bereich (pH 0,5-6,5) einzustellen. Besonders günstig ist die Ausführungsform des erfindungsgemäßen Verfahrens, bei dem die Metallsalze der organischen Verbindung und Boroxid, Borsäure oder Metallborate in Gegenwart oberflächenaktiver Substanzen auf 80-180 °C zur Bildung einer glasartigen Vorläuferverbindung umgesetzt und diese anschließend auf die dem thermodynamischen Existensbereich des entsprechenden Hexaferrits entsprechenden Temperatur erhitzt wird.

Gegebenenfalls kann sich eine Behandlung der Reaktionsprodukte mit einer Säure, beispielsweise Essigsäure, Ameisensäure oder Citronensäure, als günstig erweisen, was in einer Erhöhung der Sättigungsmagnetisierung ihren Ausdruck findet. Eine Naßmahlung oder eine Trockenmahlung, die mit der Säurebehandlung kombiniert wird, kann ebenfalls durchgeführt werden und verbessert die Dispergierbarkeit des Produkts.

Ein Vorteil des erfindungsgemäßen Verfahrens besteht darin, daß die Lösung der Salze der Hydroxycarbonsäuren absolut homogen auf atomarem Niveau sind, so daß ein extrem homogenes feinteiliges Produkt entsteht. Zur Herstellung der erfindungsgemäßen Hexaferrite geht man zweckmäßigerweise von den wäßrigen Lösungen der Metallsalze der Hydroxycarbonsäuren aus. Die Lösungen können aus festen Salzen der Hydroxycarbonsäuren oder aus Oxiden, Hydroxiden, Carbonaten, Oxidhydroxiden, Oxidhydraten oder den Elementen selbst durch Umsetzung mit den entsprechenden Hydroxycarbonsäuren hergestellt werden. Die Temperatur zur Herstellung dieser Lösungen beträgt 20 bis 90 °C. Die Konzentration der Salze liegt in den wäßrigen Lösungen zwischen 1 und 50 Gew.-%. Als Hydroxycarbonsäuren können eingesetzt werden Citronensäure, Glykolsäure, Milchsäure, Weinsäure, Äpfelsäure und andere Hydroxycarbonsäuren. Bis zu 50 % der Hydroxycarbonsäuren können durch andere Carbonsäuren, wie Ameisensäure und Essigsäure, ersetzt werden.

Der Zusatz eines Netzwerkbildners verbessert die Eigenschaften des Produkts entscheidend. Als oberflächenaktive Netzwerkbildner kommen in Frage: Alkohole, einfach, mehrfunktionelle und polymere; Fettsäuren, deren Salze, Ester und Amide; Polyether; Amine, Polyamine; Amide, Polyamide; polymere ungesättigte Carbonsäuren; Lactone; Ketone, Ketale; Acetale und Aldehyde mit mehreren funktionellen Gruppen, vorzugsweise 1-5 und quarternäre Ammoniumsalze. Ebenso können Si-organische Verbindungen wie Siliconöle, -harze oder -ester oder phosphororganische Verbindungen wie Phosphorsäureester oder Phosphonosäuren diese Funktion übernehmen.

Anstelle der Kombination einer Hydroxycarbonsäure und einer oberflächenaktiven Substanz können auch teilweise veresterte Hydroxycarbonsäuren, wobei als Alkohole die obengenannten eingesetzt werden können, verwandt werden.

Das Eindampfen der wäßrigen Lösungen kann durch konventionelle Techniken wie Eindampfen, Gefriertrocknen, Sprühtrocknen oder Destillation geschehen. Die hierbei entstehende glasartige Vorläuferverbindung läßt sich leicht in konventionellen Mühlen mahlen. Bei der Pyrolyse der glasartigen Vorläuferverbindung bei Temperaturen zwischen 160 bis 1000 °C entsteht ein Gemisch aus ultrafeinen Oxiden und Carbonaten der entsprechenden Metalle, das bei Temperaturen, die zur Bildung des entsprechenden Hexaferrits notwendig sind, zu einem feinteiligen Hexaferrit führt. Die Pyrolyse und anschließende Tempe-

3

rung wird in Gegenwart von molekularem Sauerstoff in Kammeröfen, Wirbelschichtöfen oder Drehrohröfen durchgeführt. Eine bevorzugte Ausführungsform besteht darin, daß die konzentrierte zähflüssige Lösung der Metallsalze der Hydroxycarbonsäuren bei 160 bis 400 $^\circ$ C in einem Schritt getrocknet und in Gegenwart von molekularem Sauerstoff pyrolisiert wird. Das hierbei entstehende Produkt wird dann vorzugsweise in einem Drehrohrofen zum fertigen Ferrit umgesetzt.

Die anschließende Säurebehandlung, die nicht zwingend notwendig ist, erfolgt mit 10 %iger Säure (Essigsäure, Ameisensäure, Citronensäure oder einer anderen Säure, die den Ferrit nicht löst). Vorzugsweise wird 1 bis 3 Stunden bei 20-100 $^\circ$ C gearbeitet. Besonders bevorzugt wird eine Naßmahlung in einer Rührwerkskugelmühle in der entsprechnden Säure vorgenommen.

Die besonderen Vorteile des erfindungsgemäßen Verfahrens liegen in seiner enormen Flexibilität, so daß eine Vielzahl verschiedener hexagonaler Ferrite hergestellt werden kann. Des weiteren ist die bevorzugte Ausführungs form, bei der Eisencitrat oder Ammoniumeisencitrat mit Metallcarbonaten, Oxiden oder Hydroxiden und Borsäure oder den entsprechenden Metallboraten umgesetzt wird, besonders einfach und flexibel. Weiterhin kann von reinen Ausgangsstoffen ausgegangen werden, die bei den Operationen nicht mit Hilfschemikalien verunreinigt werden, so daß man zu hochreinen exakt stöchiometrischen Produkten gelangt.

Aufgrund ihrer hervorragenden Eigenschaften sind die erfindungsgemäßen feinteiligen magnetischen Hexaferrite besonders geeignet für den Einsatz in magnetischen Aufzeichnungsmedien. Gegenstand dieser Erfindung ist somit insbesondere die Verwendung dieser Hexaferritpigmente in magnetischen Aufzeichnungsträgern.

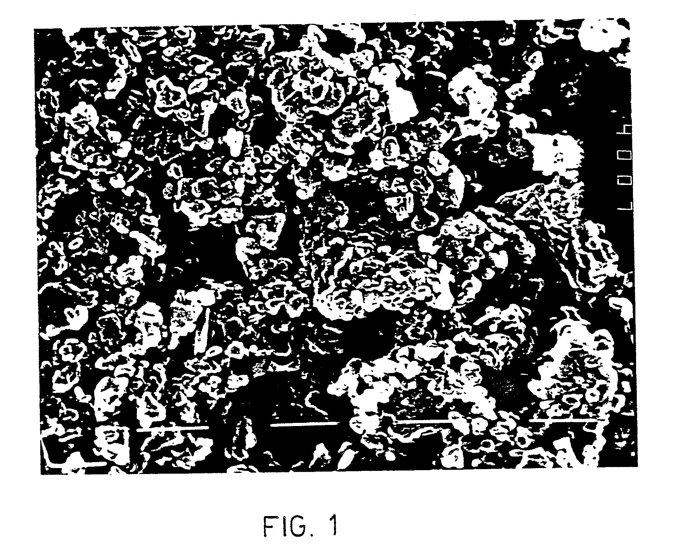

Fig. 1 zeigt eine elektronenmikroskopische Aufnahme der erfindungsgemäßen Pigmente (nach Beispiel 6/B).

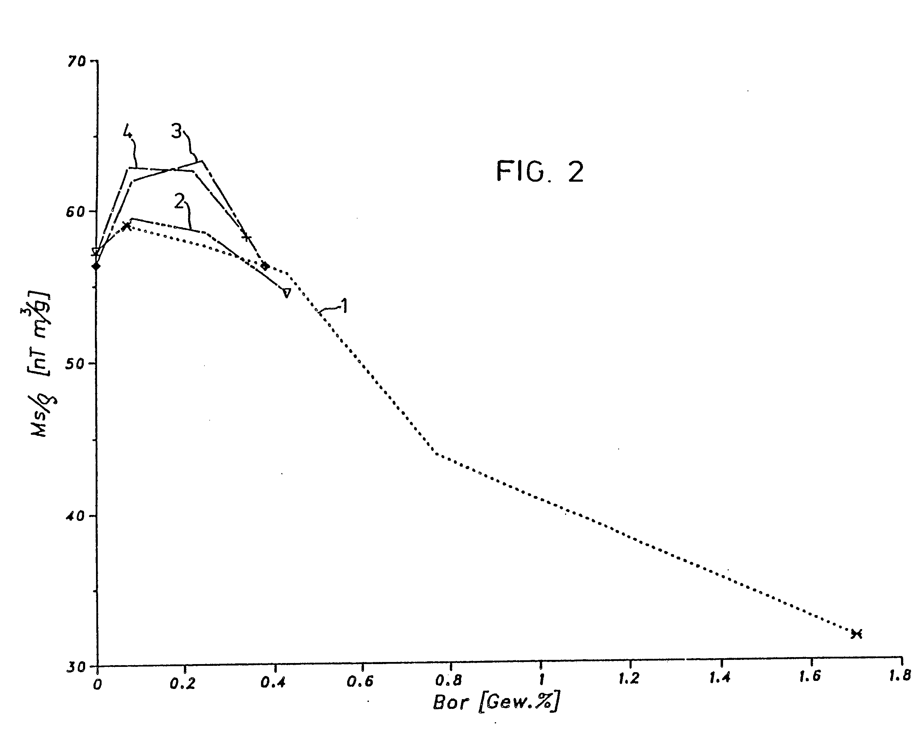

Fig. 2 zeigt den Verlauf der Koerzitivkraft in Abhängigkeit von der Bor-Dotierung

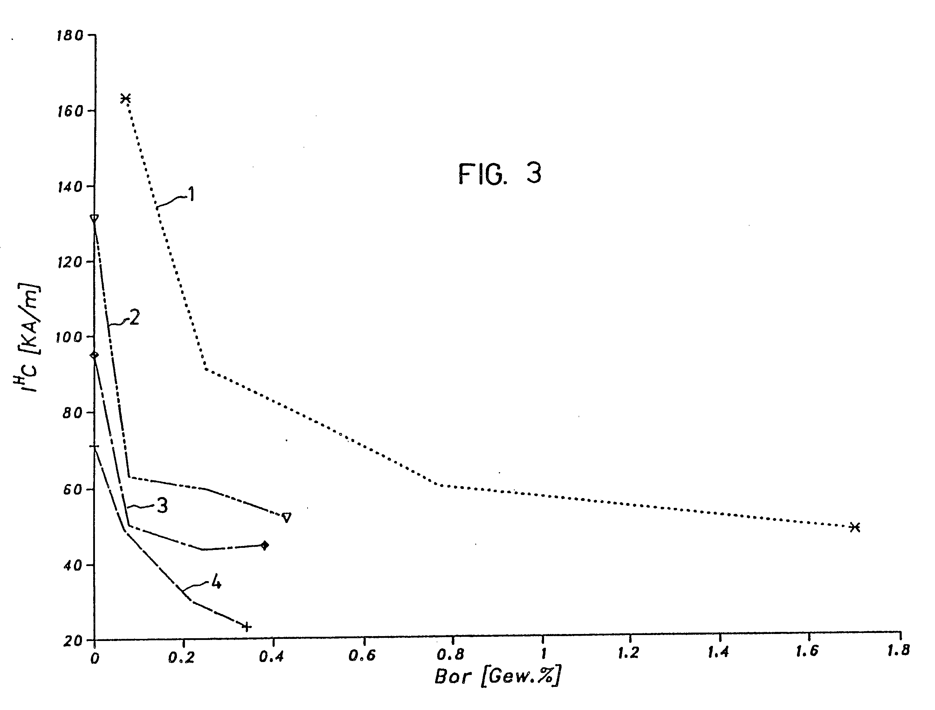

Fig. 3 zeigt den entsprechenden Verlauf der Sättigungsmagnetisierung der gleichen Substanzen wie in Fig. 2.

Kurve 1 zeigt die nach den Beispielen 1/B-5/B und V1/B, (1 = $Ba_{1,1} Co_{0,6} Ti_{0,6} Fe_{10,8} O_{19}$,

Kurve 2 zeigt die nach den Beispielen 6/B-8/B und V2/B, (2 = $Ba_{1,1} Co_{0,7} Ti_{0,7} Fe_{10,6} O_{19}$,

Kurve 3 zeigt die nach den Beispielen 9/B-11/B und V3/B, (3 = $Ba_{1,1} Co_{0,8} Ti_{0,8} Fe_{10,4} O_{19}$,

Kurve 4 zeigt die nach den Beispielen 12/B-14/B und V3/B, $Ba_{1,1} Co_{0,85} Ti_{0,85} Fe_{10,3} O_{19}$ erhaltenen Ba-Ferrite.

Die folgenden Beispiele sollen die Erfindung verdeutlichen, ohne sie jedoch einzuschränken, insbesondere wird der Fachmann durch Variation der Menge und der Art der Metallionen und der Herstellungsbedingungen im Rahmen dieser Erfindung jede gewünschte Zusammensetzung mühelos erhalten können.

Beispiele

| Beispiel 1 bis 5 ($Ba_{1,1}Co_{0,6}Ti_{0,6}B_xFe_{10,8}O_{19}$) | | | | | | | |
|---|---|---|---|---|---|---|---|
| No. | NH₄Fe Citrat | CoCO₃ | BaCO₃ | B₂O₃ | TiO-Citrat | Citronens. | Ethandiol |
| 1 | 657,1 | 14,4 | 40,55 | 0,70 | 61,0 | 170,8 | 121,4 |
| 2 | " | " | " | 2,09 | " | " | " |
| 3 | " | " | " | 3,48 | " | " | " |
| 4 | " | " | " | 6,96 | " | " | " |
| 5 | " | " | " | 10,44 | " | " | " |
| V1 | " | " | " | - | " | " | " |
| alle Angaben in Gramm | | | | | | | |
| CoCO₃ (45,5 % Co), TiOCitratlösung (8,75 % Ti), NH₄Fe-Citrat (16,3 % Fe); alle anderen Chemikalien: Chemisch rein. | | | | | | | |

Das Ammoniumeisencitrat wird in 1,2 l Wasser gelöst, die Lösung auf 80 $^\circ$ C unter Rühren aufgeheizt und CoCO₃, BaCO₃, B₂O₃, Citronensäure, TiO-Citrat und Ethandiol werden zugegeben. Dann wird eine Stunde bei 80 $^\circ$ C gerührt und am Rotationsverdampfer so weit eingeengt, daß der Eisengehalt der Lösung 10 % beträgt. Die eingeengte Lösung wird in einem Kammerofen bei 220 $^\circ$ C unter Luftzutritt getrocknet und pyrolysiert. Das Produkt wird in zwei Teile geteilt und bei 825°C 105' (/A) und bei 875°C 45' (/B) in einem Drehrohrofen geglüht.

Der hierbei entstehende hexagonale Ferrit hatte folgende Eigenschaften:

| No. | iHc (kA/m) | Ms/rho (nTm3/g) | Mr/rho (nTm3/g) | B-Gehalt Gew.-% |
|---|---|---|---|---|
| 1/A | 167,4 | 56,7 | 37,0 | 0,07 |
| 1/B | 163,2 | 59,0 | 37,6 | 0,07 |
| 2/A | 102,8 | 57,8 | 33,6 | 0,25 |
| 2/B | 91,1 | 57,6 | 33,7 | 0,25 |
| 3/A | 89,6 | 56,6 | 32,5 | 0,43 |
| 3/B | 80,8 | 55,8 | 31,2 | 0,43 |
| 4/A | 64,7 | 43,9 | 22,8 | 0,77 |
| 4/B | 60,1 | 43,8 | 22,7 | 0,77 |
| 5/A | 48,1 | 31,6 | 15,1 | 1,70 |
| V1/A | 179,4 | 53,1 | 33,8 | - |
| V1/B | 168,4 | 53,4 | 32,8 | - |

V1/A und V2/B sind die entsprechenden Vergleichsversuche, die ohne Bordotierung unter identischen Bedingungen durchgeführt wurden. Die Messungen der magnetischen Eigenschaften erfolgen bei 400 kA/m.

| Beispiel 6 bis 8 ($Ba_{1.1}Co_{0.7}Ti_{0.7}B_xFe_{10.6}O_{19}$) | | | | | | |
|---|---|---|---|---|---|---|
| No. | NH4Fe Citrat | CoCO3 | BaCO3 | B2O3 | TiO-Citrat | Citronens. | Ethandiol |
| 6 | 657.1 | 17.1 | 41.3 | 0.71 | 78.9 | 183 | 121.4 |
| 7 | " | " | " | 2.13 | " | " | " |
| 8 | " | " | " | 3.54 | " | " | " |
| V2 | " | " | " | - | " | " | " |
| alle Angaben in Gramm CoCO3 (45,5 % Co), TioCitratlösung (8,02 % Ti), NH4Fe-Citrat (16,3 % Fe); alle anderen Chemikalien: Chemisch rein. | | | | | | |

Die Herstellung erfolgte wie in den Beispielen 1 bis 5.

Der hierbei entstehende hexagonale Ferrit hatte folgende Eigenschaften:

| No. | iHc (kA/m) | Ms/rho (nTm3/g) | Mr/rho (nTm3/g) | B-Gehalt Gew.-% |
|---|---|---|---|---|
| 6/A | 73,8 | 55,7 | 29,8 | 0,08 |
| 6/B | 63,0 | 59,5 | 30,6 | 0,08 |
| 7/A | 74,2 | 58,4 | 33,3 | 0,25 |
| 7/B | 59,6 | 58,5 | 29,3 | 0,25 |
| 8/A | 57,0 | 55,5 | 27,6 | 0,43 |
| 8/B | 52,1 | 54,4 | 26,0 | 0,43 |
| V2/A | 171,9 | 51,9 | 35,3 | - |
| V2/B | 131,4 | 57,3 | 34,7 | - |

EP 0 303 151 A1

| Beispiel 9 bis 11 ($Ba_{1.1}Co_{0.8}Ti_{0.8}B_xFe_{10.4}O_{19}$) | | | | | | |
|---|---|---|---|---|---|---|
| No. | NH$_4$Fe Citrat | CoCO$_3$ | BaCO$_3$ | B$_2$O$_3$ | TiO-Citrat | Citronens. | Ethandiol |
| 6 | 685.3 | 19.9 | 42.1 | 0.72 | 91.9 | 195.8 | 121.4 |
| 7 | " | " | " | 2.17 | " | " | " |
| 8 | " | " | " | 3.61 | " | " | " |
| V3 | " | " | " | - | " | " | " |
| alle Angaben in Gramm CoCO$_3$ (45,5 % Co), TiOCitratlösung (8,02 % Ti), NH$_4$Fe-Citrat (16,3 % Fe); alle anderen Chemikalien: Chemisch rein. | | | | | | | |

Die Herstellung erfolgte wie in den Beispielen 2 bis 5.
Der hierbei entstehende hexagonale Ferrit hatte folgende Eigenschaften:

| No. | iHc (kA/m) | Ms/rho (nTm3/g) | Mr/rho (nTm3/g) | B-Gehalt Gew.-% |
|---|---|---|---|---|
| 9/A | 43,3 | 61,4 | 24,9 | 0,08 |
| 9/B | 50,3 | 62,0 | 27,7 | 0,08 |
| 10/A | 47,7 | 60,0 | 29,1 | 0,24 |
| 10/B | 43,7 | 63,3 | 27,2 | 0,24 |
| 11/A | 44,4 | 55,9 | 21,3 | 0,38 |
| 11/B | 44,8 | 56,3 | 19,5 | 0,38 |
| V3/A | 92,4 | 54,9 | 30,0 | - |
| V3/B | 95,2 | 56,4 | 32,2 | - |

| Beispiel 12 bis 14 ($Ba_{1.1}Co_{0.85}Ti_{0.85}B_xFe_{10.3}O_{19}$) | | | | | | |
|---|---|---|---|---|---|---|
| No. | NH$_4$Fe Citrat | CoCO$_3$ | BaCO$_3$ | B$_2$O$_3$ | TiO-Citrat | Citronens. | Ethandiol |
| 12 | 685.3 | 21.37 | 42.5 | 0.73 | 98.55 | 202.4 | 121.4 |
| 13 | " | " | " | 2.19 | " | " | " |
| 14 | " | " | " | 3.65 | " | " | " |
| V4 | " | " | " | - | " | " | " |
| alle Angaben in Gramm CoCO$_3$ (45,5 % Co), TiOCitratlösung (8,02 % Ti), NH$_4$Fe-Citrat (16,3 % Fe); alle anderen Chemikalien: Chemisch rein. | | | | | | | |

Die Herstellung erfolgte wie in den Beispielen 1 bis 5.
Der hierbei entstehende hexagonale Ferrit hatte folgende Eigenschaften:

6

| No. | iHc (kA/m) | Ms/rho (nTm3/g) | Mr/rho (nTm3/g) | B-Gehalt Gew.-% |
|---|---|---|---|---|
| 12/A | 46,3 | 61,6 | 28,8 | 0,07 |
| 12/B | 49,0 | 62,9 | 30,2 | 0,07 |
| 13/A | 39,5 | 59,6 | 26,8 | 0,22 |
| 13/B | 29,8 | 62,6 | 21,7 | 0,22 |
| 14/A | 24,7 | 58,0 | 17,9 | 0,34 |
| 14/B | 23,1 | 58,2 | 17,9 | 0,34 |
| V4/A | 81,8 | 56,0 | 30,3 | - |
| V4/B | 71,2 | 57,1 | 28,8 | - |

Beispiel 15 ($Ba_{1.1}Zn_{0.75}Ti_{0.75}Fe_{10.5}O_{19}$)

820 g Ammoniumeisencitrat (17,1 % Fe) werden in 1,4 l Wasser gelöst und auf 80°C aufgeheizt. Dann werden 50,0 g $BaCO_3$, 108,9 g ZnCitratlösung (6,87 % Zn), 65,0 g TiOCitratlösung (8,41 % Ti), 152,4 g Ethandiol und 2,574 g $B_2O_3$ zugegeben. Die weitere Behandlung geschieht wie bei den vorhergehenden Beispielen. Das Produkt wird in zwei Teile geteilt und bei 875°C 60' (/A) und bei 875°C 45' (/B) geglüht.

Der hierbei entstehende Hexaferrit wies folgende Eigenschaften auf:

| No. | iHc (kA/m) | Ms/rho (nTm3/g) | Mr/rho (nTm3/g) | B-Gehalt Gew.-% |
|---|---|---|---|---|
| 15/A | 181,2 | 70,7 | 38,0 | 0,21 |
| 15/B | 161,5 | 70,3 | 37,4 | 0,21 |

## Ansprüche

1. Feinteilige magnetische Hexaferritpigmente der allgemeinen Zusammensetzung:

$$M(I)_x M(II)_y M(III)_z B_v Fe_{12-(y+z+v)}O_{19},$$

wobei

$0 <= x <= 3$, $0,1 <= (y+z) <= 3$, $(x+y+z) > 1,0$ und $0 <= v <= 6$

M(I) = Ba, Sr, Ca, Eu, Pb oder eine Kombination von RE und einwertigen Kationen der Gruppe Li, Na, K, Rb, Cs, Ag, Tl und RE = La, Y, Sc, Bi oder andere Seltenerdmetalle ist und

M(II) = Fe(II), Mn, Co, Ni, Zn, Cu, Cd, Mg, Sn(II)
und

M(III) = Ti, Zr, Hf, Ga, Sn(IV), Ge, In, Sc, Nb, Ta, V, As, Sb, Bi, Al, Cr(III), Mo, W bedeuten,

dadurch gekennzeichnet, daß die Hexaferritpigmente Bor als Dotierungselement enthalten.

2. Feinteilige magnetische Hexaferritpigmente gemäß Anspruch 1, dadurch gekennzeichnet, daß der Borgehalt zwischen 0,005 und 5 Gew.-% liegt.

3. Feinteilige magnetische Hexaferritpigmente gemäß einem der Ansprüche 1 oder 2, dadurch gekennzeichnet, daß das Bor in den Hexaferrit eingebaut ist.

4. Verfahren zur Herstellung feinteiliger Hexaferritpigmente gemäß einem oder mehrerer der Ansprüche 1 bis 3 durch Zersetzung von entsprechenden Metallsalzen organischer Verbindungen in Gegenwart oberflächenaktiver Substanzen bei erhöhter Temperatur unter oxidierenden Bedingungen, dadurch gekennzeichnet, daß die Metallsalze komplexe Verbindungen von Hydroxycarbonsäuren mit den entsprechenden Metallionen und gegebenenfalls Ammoniumionen sind unter Zusatz wasserlöslicher Borverbindungen.

5. Verfahren gemäß Anspruch 4, dadurch gekennzeichnet, daß als Metallsalze solche der Zusammensetzung $NH_4(Me_nAn_m)xpH_2O$, wobei n = 0,21-0,5 für Me = Fe; m = 0,27-0,43 für An = $C_6H_4O_7$ und p = 0,04-1,5 ist, eingesetzt werden, wobei an das Anion einer Hydroxycarbonsäure und Me die durch die gewünschte Zusammensetzung des Hexaferrits vorgegebenen Metall ionen sind.

6. Verfahren gemäß einem der Ansprüche 4 oder 5, dadurch gekennzeichnet, daß die Hydroxycarbonsäure Citronensäure ist.

7. Verfahren gemäß einem oder mehrerer der Ansprüche 4 bis 6, dadurch gekennzeichnet, daß Bor als Boroxid, Borsäure, Ammoniumborat oder ein Metallborat der entsprechenden Metalle eingesetzt wird.

8. Verfahren gemäß einem oder mehrerer der Ansprüche 4 bis 7, dadurch gekennzeichnet, daß die borhaltige Substanz homogen in der für die Herstellung des feinteiligen Hexaferritpigments notwendigen Ausgangslösung verteilt wird.

9. Verfahren gemäß einem oder mehrerer der Ansprüche 4 bis 8, dadurch gekennzeichnet, daß die Metallsalze der organischen Verbindung in Gegenwart der oberflächenaktiven Substanz auf 80 bis 180°C zur Bildung einer glasartigen Vorläuferverbindung umgesetzt und diese anschließend auf die dem thermodynamischen Existenzbereich der entsprechenden Hexaferrite entsprechende Temperatur erhitzt werden.

10. Verwendung der magnetischen Hexaferritpigmente gemäß einem oder mehrerer der Ansprüche 1 bis 9 als magnetisches Aufzeichnungsmaterial.

8

FIG. 1

FIG. 2

FIG. 3

EP 0 303 151 A1

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| | **EINSCHLÄGIGE DOKUMENTE** | | EP 88112493.7 |
| A | GB - A - 1 299 490 (PHILLIPS ELECTRONIC)<br><br>* Seite 1, Zeilen 19-35; Ansprüche 1-7 *<br><br>-- | 1-10 | H 01 F 1/10 |
| A | GB - A - 1 358 423 (COCHARDT)<br><br>* Seite 1, Zeilen 13-29; Ansprüche 1-22 *<br><br>-- | 1-10 | |
| A | DE - A1 - 3 119 731 (PHILIPS)<br><br>* Zusammenfassung; Ansprüche 1-9 *<br><br>-- | 1-10 | |
| A | DE - A1 - 3 413 086 (RICOH)<br><br>* Zusammenfassung; Ansprüche 1-11 *<br><br>-- | 1-10 | |
| D,A | DE - A1 - 3 021 218 (DOWA MINING CO., LTD.)<br><br>* Patentansprüche 1-13 *<br><br>-- | 1-10 | **RECHERCHIERTE SACHGEBIETE (Int. Cl.4)**<br><br>H 01 F 1/00<br>H 01 F 10/00 |
| D,A | US - A - 4 279 763 (BOEUF.)<br><br>* Zusammenfassung; Ansprüche 1-7 *<br><br>-- | 1-10 | |
| D,A | US - A - 4 117 058 (MICHELI)<br><br>* Zusammenfassung; Ansprüche 1-3; Fig. *<br><br>-- | 1-10 | |

Der vorliegende Recherchenbericht wurde für alle Patentansprüche erstellt.

| Recherchenort | Abschlußdatum der Recherche | Prüfer |
|---|---|---|
| WIEN | 17-11-1988 | VAKIL |

| Kategorie | EINSCHLÄGIGE DOKUMENTE<br>Kennzeichnung des Dokuments mit Angabe, soweit erforderlich, der maßgeblichen Teile | Betrifft Anspruch | EP 88112493.7<br>KLASSIFIKATION DER ANMELDUNG (Int. Cl.4) |
|---|---|---|---|
| D,A | US - A - 3 716 630 (SHIRK)<br><br>  * Zusammenfassung; Anspruch 1 *<br><br>-- | 1-10 | |
| D,A | US - A - 4 493 874 (KUBO)<br><br>  * Zusammenfassung; Ansprüche 1-9 *<br><br>-- | 1-10 | |
| D,A | JAPANESE JOURNAL OF APPLIED PHYSICS Band 9, Nr. 6, Juni 1970<br><br>TOKYO WLÓDZIMIERZ WOLSKI "Barium— Strontium ferrite with admixtures of elements of the III-rd group" Seiten 711-715<br><br>  * Gesamt *<br><br>---- | 1-10 | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| WIEN | 17-11-1988 | VAKIL |